# EUROPEAN PATENT APPLICATION

(11) **EP 1 790 833 A2**
(43) Date of publication of application: **30.05.2007**
(21) Application number: 06255777.2
(22) Date of filing: 10.11.2006
(51) Int. Cl.: F01D 25/16

(54) **Bearing arrangement for a gas turbine**

(30) Priority: 29.11.2005 GB 0524339
(71) Applicant: Rolls-Royce plc, London SW1E 6AT (GB)
(72) Inventor: Newman, Andrew John, Horfield Bristol BS7 0HS (GB); Hibbert, Oliver James Richard, Hotwells Bristol BS8 4YF (GB); Cooknell, Andrew John, Winterbourne Bristol BS36 1HQ (GB); Young, Christopher James, Kettering Northants NN16 9LL (GB); Tang, Sylvia Yuen Han, Emersons Green Bristol BS16 7HN (GB); Gibbons, John Leslie, Longford Glouchester GL2 9AN (GB)
(74) Representative: Bird, Vivian John

(57) **Abstract**

A hybrid hydrodynamic/hydrostatic bearing arrangement suitable for high-speed, high temperature operations, for example a gas turbine propulsion engine is described. A large diameter bearing is constructed on the external circumference of a turbine rotor (2,20). The bearing stator (30) is mounted on the inside of the turbine casing (42). For hydrostatic operation the bearing (36,38) is provided with a supply of pressurised air derived for the high-pressure compressor of the engine. Two alternatives ways of supplying air for the bearing fluid film are proposed. In one proposal, for use where the turbine blades (8,26) are internally cooled, air is routed to the bearing space from the blade internal cooling system through apertures in the bearing rotor (2,20) carried by a blade tip shroud. In the second, the air is supplied through apertures in the bearing stator on the inside of the turbine casing (42) form an external manifold (72). For initial start-up air may be provided from an external high-pressure source. A lubricant may also be applied to the bearing surfaces to reduce initial wear.

## Description

The present invention relates to a bearing arrangement.

In particular the invention concerns an air bearing arrangement for a rotating machine, and especially a hybrid air bearing. That is the invention employs a combination of two types of fluid film bearings, a hydrodynamic or self-acting type and a hydrostatic or externally pressurised type.

The invention is intended to solve the problems caused by the high weight and cost of roller bearing arrangements in high speed, high temperature applications. In such an operating environment roller bearings have to be supported by an oil lubrication system, equipped with an adequately sized pump and filtration system. Thus adding to the basic bearing weight penalty, its cost and complexity. Fluid film bearings for high speed turbomachinary are documented, but these known arrangements have placed the bearings at the hub centre and the bearing surfaces have tended to be long, in the axial direction, relative to the bearing diameter in order to attain the required load capacity. The present invention is intended to overcome these drawbacks with a novel, hybrid air bearing arrangement. In its preferred form it is adapted for use in the turbine stages of a gas turbine engine.

According to the present invention there is provided an air bearing arrangement for an axial flow gas turbine engine rotor comprising a first bearing surface carried on a radially outer periphery of the rotor, a second bearing surface disposed inside the engine casing opposite the first bearing surface such that the two co-operate to form a fluid bearing, and means connected to a fluid source for supplying bearing fluid under pressure between the first and second bearing.

In one form of the invention applied to a gas turbine engine rotor the first bearing surface on a radially outer periphery of the rotor is carried by or formed integrally with a rotor shroud and the bearing fluid is air supplied under pressure to a space between the first and second bearing surfaces.

Preferably the bearing arrangement includes means for restricting loss of bearing fluid from the bearing arrangement comprising seal means positioned at either side of the bearing surfaces. Suitable seals means comprises brush seals or labyrinth seals.

In a particular arrangement the turbine rotor comprises a plurality of internally air-cooled turbine blades and the cooling air system is arranged such that, in operation, cooling air is exhausted from the blades through the first bearing surface into a space between the first and second bearing surfaces to provide the bearing fluid. In another arrangement the bearing fluid is introduced into a space between the first and second bearing surfaces through the second bearing surface.

The invention and how it may be carried into practice will now be described in more detail with reference to the exemplary embodiments illustrated in the accompanying drawings, in which:
Figure 1 shows a side view of part of the high-pressure turbine section of a gas turbine propulsion engine having internally air-cooled blades in which the rotors have air bearings in which the bearing fluid is supplied through the turbine blades;
Figure 2 shows a similar view of a similar turbine section in which the bearing fluid is supplied through the radially outer second bearing surface carried in the turbine casing;
Figure 3 shows a detail view of the bearing arrangements in Figure 1 incorporating a first bearing fluid supply configuration;
Figure 4 shows a corresponding detail view of the bearing arrangement of Figure 2 incorporating a second bearing fluid supply configuration;
Figure 5, shows a detail view of a first hydrodynamic bearing arrangement suitable for use in the embodiments of Figures 1 and 2; and
Figure 6 shows a detail view of a second, alternative hydrodynamic bearing arrangement suitable for use in the embodiments of Figures 1 and 2.

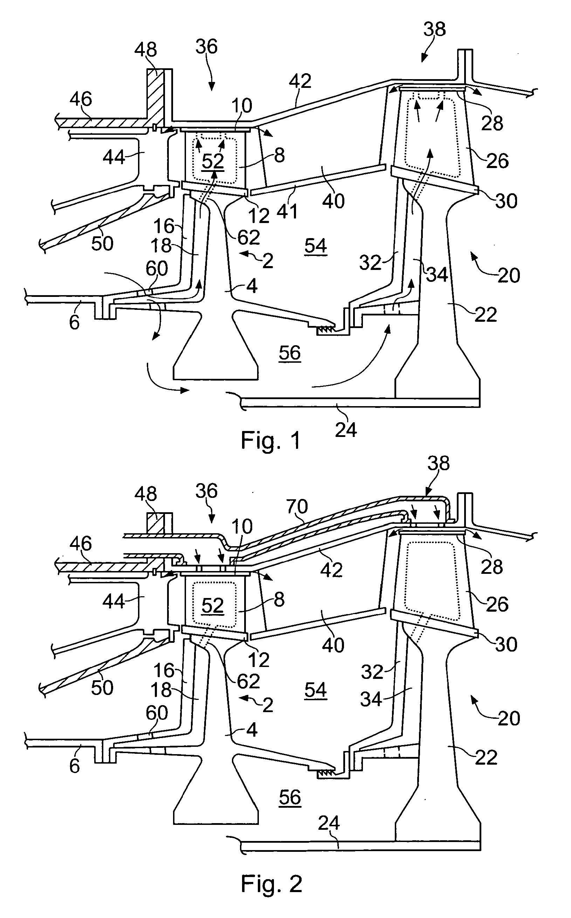

Referring now to the drawings, Figure 1 shows a side view of the high-pressure turbine section of a gas turbine propulsion engine including a first embodiment of a bearing arrangement constructed and arranged to operate in accordance with the present invention.

A first, high-pressure turbine rotor stage is indicated generally at 2 and comprises a disc 4 attached to a high-pressure spool shaft 6. A multiplicity of high-pressure turbine blades, one of which is indicated at 8, is spaced apart around the periphery of the disc 4. These blades 8 are of the shrouded type, ie each is formed with an integral shroud 10 at its radially outer tip, as well as an integral platform 12 at the blade foot. The way in which the blades 8 are carried on the disc 4 is not material to the present invention, so the blades may be formed integrally with the disc as in a "blisk" or formed separately and welded onto the disc or mounted by way of a root and slot arrangement. A cover plate 16 is attached to the upstream side of the disc 4 and spaced a short distance above the disc surface, apart from at its inner and outer circumferences, thereby creating a plenum chamber 18 against the face of the disc 4. This chamber 18 is used as a source of cooling fluid for the disc 4 and the blades 8, and is utilised in the invention as will be described further below.

A second, intermediate-pressure turbine rotor stage, indicated generally at 20, comprises a disc 22 attached to an intermediate -pressure spool shaft 24. A multiplicity of high-pressure turbine blades, one of which is indicated at 26, is spaced apart around the periphery of the disc 22. These blades 26 are also of the shrouded type and each is formed with an integral shroud 28 at its radially outer tip, as well as an integral platform 30 at the blade foot. A cover plate 32 is attached to the upstream side of the disc 22 at its inner and outer circumferences but otherwise is spaced a short distance above the disc surface, thereby creating a plenum chamber 34 against the face of the disc 22. This chamber 34 is also used as a source of cooling fluid for the disc 22 and the blades 26, and is utilised in the invention.

Both stages 2 and 20 are supported by fluid bearings of the present invention. These bearings are indicated generally at 36 and 38 respectively, and are described in more detail below. Lying between the high-pressure and intermediate-pressure turbine stages is a guide vane stator ring, generally indicated at 40, which is suspended inside a turbine casing 42. To the left of the drawing there is shown the downstream portions of a combustion section 44. The combustion section is contained within an outer casing 46 joined to the turbine casing 42 at flange joint 48. In the interior the combustion section is bounded by an inner air casing 50, which defines the inner boundary of the hot gas path in co-operation with the platforms of the turbine rotors and stator stages. Thus there are created an air space 52 inboard of the combustor inner casing 50, an air space 54 inboard of the inner platforms 41 of the stators 40, and an air space 56 between the engine shafts 6 and 24.

Conventional rotary seals are provided between static and rotating parts of the engine, and leaf seals between adjacent blades and vanes in order to confine combustion gas to the hot gas path. Thus, effective separation of the hot combustion gas and the relatively cooler fluid used for cooling purposes is maintained. A proportion of the cooling air is used in the fluid bearings at 36 and 38.

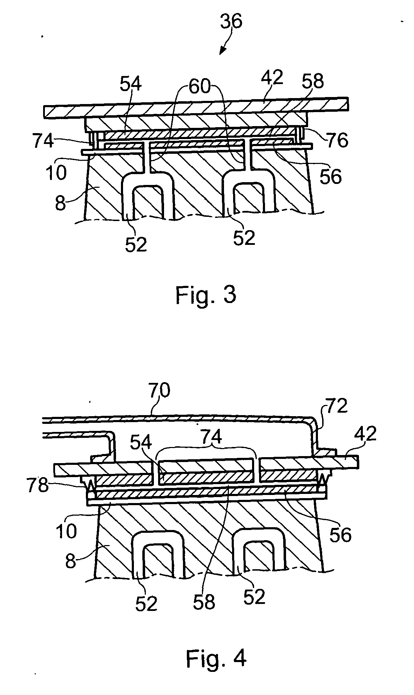

The first embodiment of the fluid bearings of the present is illustrated in more detail in Figure 3. The bearing fluid film is maintained by a supply of air into the bearing space derived from turbine cooling air. In this arrangement the bearing fluid is routed to the bearing space through the interior of the turbine blades. It is suitable therefore for use with air-cooled blades.

In Figure 1 a path for supplying cooling air to the interior of the blades 8 is indicated. Using high-pressure air in the space 52, inboard of the inner combustion casing 50 a supply path is created through apertures 60 in the disc cover plate 16, via the cover plate chamber 18 and through passages 62 in the rim of disc 4 into the interior of the blades 8. In the detailed view of Figure 3 conventional internal blade cooling passages are indicated at 52 in the interior of blade 8. The fluid bearing comprises bearing pads 54 mounted on the inner surface of the turbine casing section 42. Corresponding bearing pads 56 are carried on the outer surface of the blade shrouds 10. The notional diameter of the stationary, radially inner bearing surface of pads 54 on the interior of the casing is slightly greater than the diameter of the relatively movable bearing pads 56. Thus there is created an annular bearing space 58 between the two bearing pad surfaces 54,56. Bearing fluid is supplied to bearing space 58 from the blade internal air-cooling system through bleed passages 60 formed through the tips of blades 8.

In the second turbine stage 20 a virtually identical arrangement involving the cover plate chamber 34, an internal cooling system in blades 26 for the fluid bearing 38. The operation of which will be immediately apparent upon comparison with the above description.

A second embodiment of the invention is illustrated in Figures 2 and 4 that has many parts in common with the previously described arrangement of Figures 1 and 3, like parts are given like references. In this arrangement, however, bearing fluid is supplied to the bearing space 58 through an external route rather than an internal route. Thus, high-pressure air is ducted through conduits 70 external to the combustor and turbine casings 42, 46. On the outside of the casing 42 at each fluid bearing position an annular manifold 72 is secured against the exterior of the casing 42 encircling the bearing position. The interior of this manifold 72 is in free communication with conduit 70. Bleed holes 74 are formed through the radially outer bearing pads 54 to supply fluid into the bearing space 58.

In order to reduce fluid loss from the fluid bearing spaces 58 sealing means are located at either side of the bearing pads around the entire circumference. These are not specific to either of the above described embodiments and may be interchanged. In Figure 3 large diameter brush seals 74, 76 are positioned at either side of the fluid bearing pads 54,56 to limit fluid loss form the bearing space 58. Figure 4 illustrates as an alternative knife-edge seals 78, 80 in the same locations.

In both embodiments, during operation, a bearing fluid film is maintained in the bearing space 58 between the bearing surfaces by an air supply derived ultimately from the high-pressure section of the engine. In view of the range of rotor speeds to be accommodated form stationary to full engine speed, the bearings are operated in a hybrid mode. At engine start-up and very low speed rotation they are operated as a hydrostatic bearings. That is, an external source of air pressure is connected to the engine to pressurise the bearing spaces 58 causing the rotors to centre themselves within the bearing stators 30 and to provide initial load bearing capacity and low-speed stability. At higher speeds an internal high-pressure source may supplant the external source. The bearing surfaces 54,56 are also configured for hydrodynamic operation so that as the rotor stages accelerate the hydrodynamic properties dominate and provide high-speed stability with high bearing stiffness and load capacity. Then the air supply flow is required only to replace that lost through the edge seals.

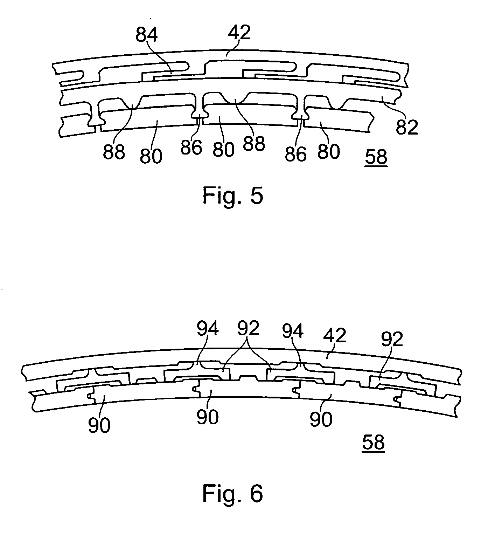

Figures 5 and 6 show two possible, alternative arrangements of bearing surface capable of producing hydrodynamic performance characteristics. In the first arrangement of Figure 5 there is shown a segment of an outer bearing annulus comprising a multiplicity of arcuate bearing pads 80. These are assembled edge to edge in a complete annulus suspended inside an outer turbine casing 42 by means of an intermediate support arrangement comprising a hoop ring 82. The hoop ring 82 is located inside the casing 42 by a multiplicity of flexible support fingers 84 spaced apart equidistantly around the circumference of the casing and which engage the outer surface of the ring. The multiplicity of arcuate bearing pads 80 is suspended inside the hoop ring 82 by an equal number of flexible, pendant support members 86 which locate between adjacent edges of the bearing pads 80. Spaced a short from each support member 86 in a circumferential direction and extending across the width of a bearing pad 80 is a pivot rib 88. The arrangement is such that in operation each of the bearing pads 80 is capable of a slight tilt about the pivot 88, thereby creating a wedge shaped in the bearing space 58. The interdependency of the support arrangement has the effect of causing each bearing pad to produce a similar tilt in the next adjacent bearing pad. As a result a series of wedge shaped spaces is created around the whole circumference generating a series of pressure cushions in the bearing space upon which the bearing rotor rides.

Figure 6 illustrated another such arrangement in which a multiplicity of self-supporting, interlocking, tilting pads 90 are located around the inside of engine casing 42 by means of a multiplicity of gimbal members 92. Each of the members 92 approximates to a flattened "Y-shaped" member presenting three pivot edges. On its radially outer side it has a pivot edge 94 engaged with the inner surface on the engine casing 42, and on its radially inner side it has two pivot edges 96,98 space apart in the circumferential direction. These two latter pivots engage with the outer faces of two adjacent bearing pads 90. The effect is the same as in the previous arrangement in producing a series of pressure cushions around the whole circumference of the bearing space upon which the bearing rotor rides.

Although the invention has been described above in the context of an aircraft propulsion engine we envisage it will find wider application with any large diameter rotating component requiring radial load support where the use of conventional oil/grease bearings is not optimal. For example because of very high speeds, high temperatures or dusty and dirty conditions where potential contaminants must be excluded form the bearing spaces. Also, the invention may be employed in medical and pharmaceutical equipment where the lubricants themselves may become a contaminant.

## Claims

1. An air bearing arrangement for an axial flow gas turbine engine rotor comprising a first bearing surface carried on a radially outer periphery of the rotor, a second bearing surface disposed inside the engine casing opposite the first bearing surface such that the two co-operate to form a fluid bearing, and means connected to a fluid source for supplying bearing fluid under pressure between the first and second bearing.

2. A bearing arrangement as claimed in claim 1 wherein the first bearing surface on a radially outer periphery of the rotor is carried by or formed integrally with a rotor shroud.

3. A bearing arrangement as claimed in claim 1 or claim 2 wherein the source of bearing fluid is the engine compressor.

4. A bearing arrangement as claimed in any preceding claim further comprising seal means for stemming the loss of bearing fluid from the bearing arrangement.

5. A bearing arrangement as claimed in claim 4 wherein seal means is positioned at either side of the bearing surfaces.

6. A bearing arrangement as claimed in claim 5 wherein the seals means comprise brush seals or labyrinth seals.

7. A bearing arrangement as claimed in any preceding claim further comprising means for providing lubrication to the bearing for starting or very slow turning of the rotor.

8. A bearing arrangement as claimed in any preceding claim wherein the turbine rotor comprises a plurality of internally air-cooled turbine blades and the cooling air system is arranged such that, in operation, cooling air is exhausted from the blades through the first bearing surface into a space between the first and second bearing surfaces to provide the bearing fluid.

9. A bearing arrangement as claimed in claim 9 or claim 10 wherein the bearing fluid is introduced into a space between the first and second bearing surfaces through the second bearing surface.
